# EUROPEAN PATENT APPLICATION

(11) **EP 0 791 809 A2**
(43) Date of publication of application: **27.08.1997**
(21) Application number: 97660016.3
(22) Date of filing: 19.02.1997
(51) Int. Cl.: G01F 23/14, B67D 1/00, G06F 153/00

(54) **Method and equipment in the beverage distribution to the large tanks of the distribution area of a brewery**

(30) Priority: 21.02.1996 FI 960776
(71) Applicant: Nissinen, Jarmo, 50600 Mikkeli (FI); Järvinen, Esa, 50600 Mikkeli (FI)
(72) Inventor: Nissinen, Jarmo, 50600 Mikkeli (FI); Järvinen, Esa, 50600 Mikkeli (FI)
(74) Representative: Helke, Kimmo Kalervo

(57) **Abstract**

The object of the invention is a method and equipment for measuring the amounts of beverages in protective bags (12) in large tanks (11) in various retail sales points or points of use in the distribution area of a brewery and for transmitting them to a centralized location (13) and for monitoring the condition of the refrigeration machinery (20) at each point of use. In the method the quantities of beverages are checked at regular intervals and refilling is ordered for each tank when it empties beyond a set limit. At each point of use cooling takes place by means of the aforesaid refrigeration machinery (20), which cools both the tank (11) and the malted beverage extracted for serving. At each point of use, the quantity of beverage in each tank (11) is measured at regular intervals, as is at least one operating temperature (19.1, 19.2, 19.3) of the refrigeration system, and data concerning the measured amount of beverage and temperature is transmitted to the central unit (17, 18) of the point of use, which, in a manner that is as such known, transmits the data through a remote data link to the aforesaid centralized location (13). With the aid of the quantity data received, the distribution of beers is planned in a manner that is as such known, while with the aid of the temperature data, the condition of the refrigeration machinery (20) is monitored, when it is possible to examine the refrigeration machinery (20) at a point of use that has stated temperatures deviating from the normal.

## Description

The object of this invention is a method and equipment for measuring the quantity of beverages in protective bags in large tanks in various retail sales points, i.e. points of use in the distribution area of a brewery, and for transmitting the measurements to a centralized place to monitor the condition of the refrigerating machinery at the point of use, in which method the amounts of beverage in the tanks are checked at regular intervals and replenishments are ordered when each tank empties below a set limit, and in which the refrigeration at each point of use takes place with the aid of the aforesaid refrigerating machinery, which refrigerates both the refrigerating water circulating through the jackets of the tanks and the malted beverage extracted for serving.

Especially the larger retailers of beer, i.e. restaurants, use large tanks with a capacity of 1000 litres equipped with a cooling jacket, in which beer is stored in plastic bags. When the tank is filled, the plastic bag is always replaced with a new one, which is generally connected to the outlet pipe of the tank by means of a suitable sleeve. Compressed air is led to the upper part of the tank, so that the beer will flow out of the tank and bag. The connecting pipes from the tank are connected to the aforesaid outlet pipe, which, for practical reasons, is usually a detachable component. To permit inspection, there are two small windows in the tank, by means of which the amount of liquid in the tank has been checked up til now. This manual operation has been quite slow and inaccurate. The measurement of beer or other beverage has been hindered by the aforesaid protective bag. Many different kinds of meters have been developed for the measurement of liquid as such, but so far there has been no practical solution to the measurement of the liquid volume in large beer tanks.

Another problem in the use of large tanks is the control of temperature and the related operation of the refrigeration machinery. Usually the distribution of beer takes place during the day, when consumption is low and there are no problems with cooling. This being the case, distribution personnel cannot effectively transmit maintenance information. Usually, problems first appear during a period of high consumption, when the greatest cooling capacity is required. A fault that is difficult to notice occurs when the circulation of the refrigerating water in the jacket cooling is prevented, for example, due to pump failure. The beer being served cools normally, but the beer begins to warm and thus spoil in the tank. In some countries, instead of using a cooled double jacket, the tanks are situated in a separately refrigerated room, when the temperature must be monitored.

One general-purpose meter for measuring the surface level of a liquid is known from International Application Publication WO 90/08303, but this is not very suitable for use with the aforesaid large beer tanks, because the liquid pressure cannot be obtained at the bottom of the tank, due to the protective bag. US Patent Publication 4,602,344 presents a similar tank surface meter combined with a remote display system. Various surface level meters that are as such similar and remote display systems have been described, but they cannot be directly applied to beer tanks. Solutions to the monitoring of beer refrigeration machinery have not been developed.

This invention is intended to create a new kind of method and equipment for the distribution of beer and other beverages in refrigerated large tanks. The characteristic features of the method according to the invention are described in the accompanying Patent Claim 1. The characteristic features of one type of advantageous equipment are correspondingly described in Patent Claim 4. Considerable advantages are gained when, according to the invention, the measurement of quantity and data on the temperature of the refrigeration system are combined and transmitted to the brewery centrally, or to a corresponding central location. Not only can deliveries be handled in a logistically optimal manner, but it is also generally possible to arrange maintenance of the refrigeration equipment on a preventive basis, so that faults do not interrupt distribution. By means of the centralized monitoring of temperature, disturbances can be located at an extremely early stage and supervision of the refrigeration equipment can be combined with the distribution of beer or other beverages.

In what follows, the invention is described by reference to the accompanying diagram, which shows the system at one point of use.

The box shown with a broken line at the right of the diagram shows the system at the brewery, which includes a modem 21, which creates a data communications link, and a microcomputer 22, which collect data from all points of use within the distribution area. The remote transfer devices can be implemented in some other known method than by using a modem. The right-hand section shows one point of use, for example, the storeroom of a restaurant, in which in this example there are nine large tanks 11, in each one of which there is a plastic bag 12, for the hygienic storage of beer. The upper part of the tanks 11 has a compressed air connection, by means of which the beer is pressed through the outlet line 14 to the distribution line. In each tank 11 there is a double jacket 11.1, which is part of a circulating water circuit 24. Pump 25 circulates the cooling water through refrigerating machine 20 to cool each tank 11. The refrigerating machine 20 includes a compressor 20.3, an evaporator 20.2 located in the water compartment, and a condenser 20.1.

For surface level measurements, a pressure difference sensor 16 is installed at the outlet connection 14, and receives reference pressure from the compressed air connection 15 through connection line 32. In this application, three pressure difference sensors are connected to one analog card, in which there are three input connections and three A/D converters 34 for transferring the data to the central unit 17. The central unit 17 receives the data lines from all of the A/D converters. By means of these, the central unit 17 collects the individual quantity data from all of the six tanks, essentially as a continuous measurement into its memory. The central unit also includes an input connection for the data connection of the A/D converter 21, which transmits the signals from the temperature sensors 19.1, 19.2, and 19.3. By means of these temperature sensors, monitoring takes place of the temperature of the circulating water circuit 24, the condenser 20.1, and the evaporator 20.2 (water compartment). To notice a possible lack of water, sensor 19.2 is located about 5 cm. below the normal water level.

The system is programmed, for instance, in such a way that every night, a call is placed through the modems 21 and 18 from the brewery and the data articulated by each central unit 17 is called to the brewery's microcomputer 22, in which they can be analysed and arranged. After error analysis, delivery data can be derived from the quantity data for the distribution of liquid, while possible disturbances in the operation of the refrigeration machinery can be observed from the temperature data. In this way, it is possible to notice even quite random and short disturbances in the operation of refrigeration machinery, when the central unit 17 is programmed to record in its memory temperature data that are regarded as abnormal according to suitable criteria and to transmit them with the other material to the brewery 13.

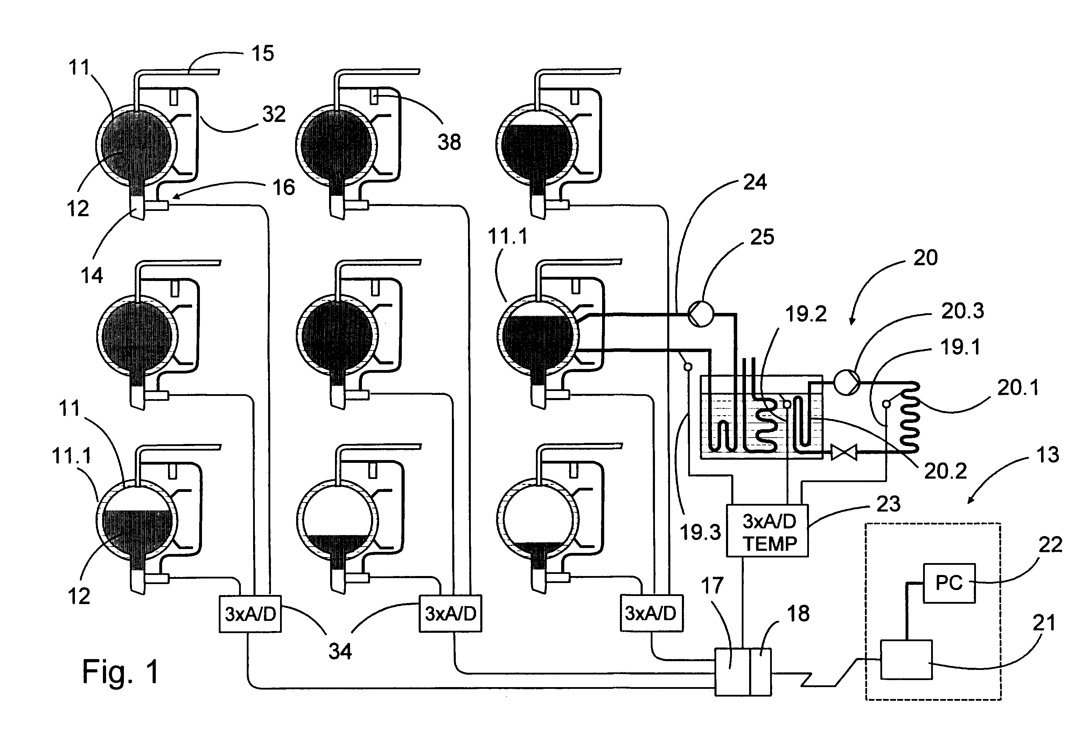

## Claims

1. A method for measuring the amounts of beverages in protective bags (12) in large tanks (11) in various retail sales points or points of use in the distribution area of a brewery and for transmitting them to a centralized location (13) and for monitoring the condition of the refrigeration machinery (20) at each point of use, in which method the quantities of beverages are checked at regular intervals and refilling is ordered for each tank when it empties beyond a set limit, and at each point of use cooling takes place by means of the aforesaid refrigeration machinery (20), which cools both the tanks (11) and the malted beverage extracted for serving, characterized in that at each point of use, the quantity of beverage in each tank (11) is measured at regular intervals, as is at least one operating temperature (19.1, 19.2, 19.3) of the refrigeration system, and data concerning the measured amount of beverage and temperature is transmitted to the central unit (17, 18) of the point of use, which, in a manner that is as such known, transmits the data through a remote data link to the aforesaid centralized location (13), where, with the aid of the quantity data received, the distribution of beers is planned in a manner that is as such known, while with the aid of the temperature data, the condition of the refrigeration machinery (20) is monitored, when it is possible to examine the refrigeration machinery (20) at a point of use that has stated temperatures deviating from the normal.

2. A method according to Claim 1, characterized in that the temperatures of the compression refrigeration machinery's condenser (20.1), evaporator (20.2) and/or the cooling temperature of the tanks (11) are measured, for example, the temperature of the circulating water circuit (24) cooling them.

3. A method according to Claim 1 or 2, characterized in that the quantity of liquid in each tank (11) is measured by means of the difference in pressure between the liquid in the outlet connection (14) of the tank and the air in the compressed air connection (15).

4. Equipment for measuring the quantities of beverages in protective bags (12) in large tanks (11) in various retail sales outlets, i.e. points of use, in the distribution area of a brewery and transmitting the measurements to a centralized location (13), e.g. the brewery, and for monitoring the condition of the refrigeration machinery at the point of use, which equipment includes at each point of use pressure difference sensors (16) situated with the tanks (11) to measure the quantities of beverages and a central unit (17) equipped with remote data transmission devices (18), refrigerating machinery (20), which cools both the tanks (17) and the malted beverage extracted for serving, characterized in that the equipment also includes temperature sensors (19.1, 19.2, 19.3) connected to the central unit (17) for the measurement of the temperature of the refrigerating machinery's condenser (20.1), evaporator (20.2), or the circulating cooling water, as well as an operating system for transmitting the temperature data in addition to the beverage quantity data.

5. Equipment according to Claim 4, characterized in that the remote data transfer devices (18) include a modem which is arranged to operate with a counter-modem (21).
